# EUROPÄISCHE PATENTSCHRIFT

(11) **EP 0 789 232 B1**
(45) Veröffentlichungstag und Bekanntmachung des Hinweises auf die Patenterteilung: **17.04.2002**
(21) Anmeldenummer: 97101995.5
(22) Anmeldetag: 07.02.1997
(51) Int. Cl.: G01G 23/01

(54) **Kalibriervorrichtung für eine Waage**
Calibration device for a scale
Dispositif de calibrage pour une balance

(30) Priorität: 12.02.1996 DE 19605087; 22.08.1996 DE 29614601 U
(43) Veröffentlichungstag der Anmeldung: 13.08.1997
(73) Patentinhaber: Mettler-Toledo GmbH, 8606 Greifensee (CH)
(72) Erfinder: Emery, Jean-Christophe, 8603 Schwerzenbach (CH); Glättli, Thomas, 8645 Jona (CH)
(74) Vertreter: Patentanwälte Leinweber & Zimmermann

(56) Entgegenhaltungen:
- CH-A- 661 121
- DE-A- 2 609 560
- DE-A- 4 305 426

## Beschreibung

Die Erfindung betrifft eine Kalibriervorrichtung für eine eine Lastaufnahmeeinrichtung für zu wiegende Lasten, eine Lastmeßeinrichtung und ein der Kraftübertragung zwischen der Lastaufnahmeeinrichtung und der Lastmeßeinrichtung dienendes Hebelwerk, das mit einem eingangsseitigen Ankopplungsbereich an die Lastaufnahmeeinrichtung und mit einem ausgangsseitigen Ankopplungsbereich an die Lastmeßeinrichtung angekoppelt ist, aufweisende Waage, wobei das Hebelwerk ferner einen von dem eingangsseitigen und dem ausgangsseitigen Ankopplungsbereich getrennten Ankopplungsbereich zur lösbaren Ankopplung einer für den normalen Wägebetrieb abkoppelbaren Kalibrierkraft aufweist.

Bei einer aus der DE 26 09 560 A1 bekannten Kalibriervorrichtung der eingangs beschriebenen Art ist eine etwa V-förmige Aufnahme für ein Kalibriergewicht in einem der Kraftuntersetzung zwischen der Lastaufnahmeeinrichtung und der Lastmeßeinrichtung dienenden Hebel vorgesehen. Zum Kalibrieren ist ein im Inneren der Waage im normalen Wägebetrieb vom Hebel abgekoppeltes Kalibriergewicht in die Aufnahme einlegbar. Die Aufnahme ist dabei zur Sicherstellung einer möglichst genauen Kalibrierung der Waage über ihren gesamten Wägebereich mit einem vergleichsweise kleinen Kalibriergewicht so an dem Hebel angeordnet, daß die Gewichtskraft des Kalibriergewichtes mit ihrem vollen Betrag, d. h. ohne Untersetzung, auf die Lastmeßeinrichtung wirkt.

Zur Ausnutzung der aufgrund der Auflösung erreichbaren absoluten Genauigkeit einer Waage, die beispielsweise beim Einsatz einer 32-kg-Wägezelle 0,1 g betragen oder sogar noch höher sein kann, ist es bei Verwendung der bekannten Kalibriervorrichtung erforderlich, das Kalibriergewicht sowohl in Längsrichtung des Hebels als auch senkrecht dazu mit einer Positionsgenauigkeit in der Größenordnung von 10⁻³ mm auf der Längsachse des Hebels in die Aufnahme einzulegen. Zur Sicherstellung einer derartigen Positionsgenauigkeit wird eine äußerst komplexe Mechanik zur lösbaren Ankopplung des Kalibriergewichtes benötigt. Bei einer weniger genauen Ankopplung des Kalibriergewichts kann die durch die Auflösung bestimmte absolute Genauigkeit der Waage nicht realisiert werden.

Angesichts dieses Problems liegt der Erfindung die Aufgabe zugrunde, eine Kalibriervorrichtung der eingangs genannten Art zu schaffen, die bei hoher Kalibriergenauigkeit mechanisch einfach ist.

Erfindungsgemäß wird diese Aufgabe dadurch gelöst, daß der zur Kalibrierung dienende Ankopplungsbereich mit einem zur Richtung der Kalibrierkraft parallel geführten und zu deren lösbaren Ankopplung dienenden Glied einer Parallelogrammführung mit zwei zueinander parallelen Lenkern, die an ihren einen Enden durch das parallelgeführte Glied und an ihren anderen Enden durch ein feststehendes Glied miteinander verbunden sind, gekoppelt ist.

Durch die der Ankopplung der Kalibrierkraft dienende Parallelogrammführung wird die Momentenempfindlichkeit bei der Einleitung der Kalibrierkraft stark herabgesetzt. Es wird eine deutliche Verringerung der Abhängigkeit der vom zur lösbaren Ankopplung dienenden Ankopplungsbereich an die Lastmeßeinrichtung übertragenen Kraft von der Position des Angriffspunktes der Kalibrierkraft erreicht.

Für den beispielhaften Fall einer 32-kg-Wägezelle mit einem zur Kraftuntersetzung dienenden Hebelwerk kann unter Verwendung der erfindungsgemäßen Kalibriervorrichtung mit einem zur Erzeugung der Kalibrierkraft dienenden Kalibriergewicht von 400 g zur Kalibrierung der Wägezelle über ihren vollen Wägebereich die absolute Meßgenauigkeit in der Größenordnung einer angezeigten Auflösungsgenauigkeit von 0,1 g bereits mit einer Positionsgenauigkeit des Kalibriergewichtes in einer Horizontalebene in der Größenordnung von 10⁻¹ mm erreicht werden. Eine derartig geringe Positionsgenauigkeit kann bereits mit einer vergleichsweise einfachen Anordnung zur lösbaren Ankopplung der Kalibrierkraft an das parallelgeführte Glied der Parallelogrammführung verwirklicht werden. Dadurch kann trotz des Einsatzes der auf den ersten Blick recht aufwendig erscheinenden, allein der Ankopplung einer Kalibrierkraft dienenden Parallelogrammführung insgesamt eine Vereinfachung des zur Sicherstellung des Erhaltes oder der Beibehaltung der erreichbaren absoluten Genauigkeit einer Waage benötigten mechanischen Aufbaus einer Kalibriervorrichtung erreicht werden.

Wie bereits vorstehend erläutert, kann die Kalibrierkraft bei der erfindungsgemäßen Kalibriervorrichtung besonders einfach mit einem an das parallelgeführte Glied ankoppelbaren Kalibriergewicht erzeugt werden. Zur Kalibrierung der Waage in unterschiedlichen Meßbereichen ist auch daran gedacht, die Kalibriervorrichtung mit mehreren unabhängig voneinander an das parallelgeführte Glied ankoppelbaren Kalibriergewichten zu versehen.

Ein besonders kompakter Aufbau der erfindungsgemäßen Kalibriervorrichtung kann erreicht werden, wenn an dem parallelgeführten Glied eine Trägereinrichtung mit sich im wesentlichen quer zur Parallelogrammebene der Parallelogrammführung erstreckenden Aufnahmebereichen für das Kalibriergewicht angeordnet ist. Mit dieser Anordnung kann das Kalibriergewicht neben den Lenkern, d. h. in einer parallel zur Parallelogrammebene verlaufenden Ebene, angekoppelt werden. Dadurch kann eine Erhöhung der im allgemeinen von der Längsausdehnung der Lenker und der Meßzelle vorgegebenen Länge der Kalibriervorrichtung durch die Ankopplung des Kalibriergewichtes minimiert werden.

Ungeachtet der durch die Parallelogrammführung stark herabgesetzten Genauigkeitsanforderung ist eine gut definierte Positionierung des Kalibriergewichts zweckmäßig. Dazu ist die Trägereinrichtung vorteilhafterweise mit einem Arretierelement für das Kalibriergewicht versehen.

Das Arretierelement kann besonders einfach in Form einer Ausnehmung und/oder eines Vorsprungs gebildet werden, wenn in dem Kalibriergewicht ein damit in Eingriff bringbarer komplementärer Vorsprung und/oder eine damit in Eingriff bringbare komplementäre Ausnehmung vorgesehen ist.

Besonders einfach kann eine wohldefinierte Positionierung des Kalibriergewichtes in Längsrichtung der Lenker erreicht werden, wenn die Trägereinrichtung zwei in Längsrichtung der Lenker voneinander beabstandete und sich im wesentlichen parallel zueinander erstreckende, vorzugsweise stangenförmige Trägerelemente aufweist. Eine derartige Trägerelementanordnung gewährleistet eine automatische Kalibriergewichtspositionierung in Längsrichtung der Lenker, wenn das Kalibriergewicht zumindest teilweise in den Raum zwischen den Trägerelementen einsetzbar ist und im angekoppelten Zustand an beiden Trägerteilen mit einem Flächenelement anliegt, das quer zu einer von den Trägerelementen festgelegten Ebene verläuft. Dazu kann das Kalibriergewicht beispielsweise in Form eines Kreiszylinders mit einem den Abstand der beiden Trägerteile übersteigenden Durchmesser gebildet werden.

Im Fall stangenförmiger Trägerteile kann das Arretierelement besonders einfach in Form mindestens eines koaxial zur Längsachse mindestens eines der Trägerelemente verlaufenden Steges, der vorzugsweise axialschnittlich die Form eines Dreiecks mit einem an der Stange anliegenden Schenkel aufweist, ausgebildet werden, wenn das Kalibriergewicht eine der axialschnittlichen Form des Ringes entsprechende Ausnehmung aufweist.

Bei Verwendung des vorstehend bereits beschriebenen kreiszylindrischen Kalibriergewichtes ist die Ausnehmung vorzugsweise in Form einer in der Zylindermantelfläche vorgesehenen, vorzugsweise die Form eines Dreiecks mit einer zur Zylinderachse weisenden Spitze aufweisenden umlaufenden Nut gebildet. Alternativ ist auch daran gedacht, das Arretierelement in Form einer Nut zu bilden und das Kalibriergewicht mit einem dazu komplementären umlaufenden Steg zu versehen.

Zum Ankoppeln des Kalibriergewichtes kann ein in einer ersten Position zum Halten des Kalibriergewichtes in einer vom parallelgeführten Glied gelösten Stellung dienender und zum Ankoppeln des Kalibriergewichtes an das parallelgeführte Glied in eine zweite Position verstellbarer Halter eingesetzt werden. Der Halter weist dabei zweckmäßigerweise einen Auflagebereich auf, auf dem das Kalibriergewicht entgegen der Schwererichtung abstützbar ist. Vorteilhafterweise weist der Auflagebereich des Halters dabei einen das Kalibriergewicht in der ersten Position quer zur Schwererichtung abstützenden Flächenbereich, beispielsweise in Form einer zu einem Vorsprung des Kalibriergewichtes komplementären Nut, auf.

Zum Lösen des Kalibriergewichtes vom parallelgeführten Glied ist der Halter vorzugsweise ober- und/oder unterhalb der Trägerelemente und dazwischen an das Kalibriergewicht anlegbar.

Zweckmäßigerweise ist der Halter zur Verstellung zwischen seiner ersten und seiner zweiten Position um eine sich vorzugsweise senkrecht zur Parallelogrammebene erstreckende Achse schwenkbar oder in Schwererichtung verschiebbar.

Eine besonders zuverlässige Sicherung des Kalibriergewichtes in der ersten Position kann erreicht werden, wenn der Halter im wesentlichen U-förmig ausgebildet ist und das Kalibriergewicht in der ersten Position zwischen den U-Schenkeln gehalten wird.

Ein besonders kompakter Aufbau ist erreichbar, wenn der Halter im wesentlichen L-förmig ausgebildet ist, wobei einer der L-Schenkel in der ersten Position an der Unterseite des Kalibriergewichtes anliegt.

Eine weitere Verringerung des Platzbedarfs einer derartigen Kalibriervorrichtung wird erreicht, wenn der an der Unterseite des Kalibriergewichtes anliegende L-Schenkel sich in der zweiten Position im wesentlichen zwischen den Trägerelementen erstreckt.

Im Hinblick auf eine besonders kompakte Anordnung der erfindungsgemäßen Kalibriervorrichtung ist es ferner besonders bevorzugt, wenn sich ein Bereich des parallelgeführten Gliedes zwischen den Lenkern erstreckt.

Zur Gewährleistung einer ausreichenden Biegesteifigkeit der einzelnen Elemente der Parallelogrammführung bei gleichzeitig möglichst kompakter Ausführung der Kalibriervorrichtung ist es besonders zweckmäßig, wenn der sich zwischen den Lenkern erstreckende Bereich des parallelgeführten Gliedes zumindest abschnittweise durch einen materialfreien Raum in Form einer dünnen Schnittlinie von den Lenkern getrennt ist. Dadurch kann im Hinblick auf eine Optimierung der Biegesteifigkeit die Materialstärke des parallelgeführten Gliedes und/oder der Lenker unter Vermeidung einer unerwünschten Berührung zwischen dem parallelgeführten Glied und den Lenkern maximiert werden.

Zur Maximierung der Biegesteifigkeit des sich zwischen den Lenkern erstreckenden Bereichs des parallelgeführten Gliedes ist es ferner besonders zweckmäßig, wenn jeder der Lenker in bekannter Weise zwei in seiner Längsrichtung voneinander beabstandete Biegestellen aufweist, die den Biegestellen des jeweils anderen Lenkers gegenüberstehen, von denen mindestens eine auf ihrer der gegenüberstehenden Biegestelle zugewandten Seite von einem andererseits das parallelgeführte Glied begrenzenden materialfreien Raum in Form eines sich konvex zu dieser Biegestelle wölbenden Abschnittes einer dünnen Schnittlinie begrenzt ist. Auf diese Weise kann der zwischen der von dem materialfreien Raum in Form einer dünnen Schnittlinie begrenzten Biegestelle und der dieser gegenüberstehenden Biegestelle angeordnete Bereich des parallelgeführten Gliedes mit einer besonders großen Materialstärke ausgebildet werden. Die dadurch erreichte hohe Biegesteifigkeit dieses Bereiches kann in vorteilhafter Weise zur störungsfreien Einleitung der Gewichtskraft eines auf einer an diesem Bereich angeordneten Trägereinrichtung aufliegenden Kalibriergewichtes genutzt werden.

Zur Gewährleistung einer besonders zuverlässigen Kalibrierkrafteinleitung ist es besonders vorteilhaft, wenn der zur Ankopplung der Kalibrierkraft dienende Bereich einerseits über eine Biegestelle an das Hebelwerk und andererseits über eine weitere Biegestelle an das parallelgeführte Glied angelenkt ist.

Für eine Erhöhung der Biegesteifigkeit des dem zur Ankopplung der Kalibrierkraft dienenden Bereich benachbarten Bereiches des Hebelwerkes und/oder des dem zur Ankopplung der Kalibrierkraft dienenden Bereich benachbarten Bereiches des parallelgeführten Gliedes ist es besonders vorteilhaft, wenn mindestens eine der zum Anlenken des zur Ankopplung der Kalibrierkraft dienenden Bereiches vorgesehenen Biegestellen zumindest einerseits von einem materialfreien Bereich in Form einer dünnen Schnittlinie begrenzt ist.

Im Hinblick auf die Verwendung möglichst gut handhabbarer Kalibriergewichte bei Waagen mit einer großen Kraftuntersetzung oder -übersetzung ist es besonders zweckmäßig, wenn das Übersetzungsverhältnis der Kraftübertragung zwischen dem eingangsseitigen Ankopplungsbereich und dem ausgangsseitigen Ankopplungsbereich sich von dem Übersetzungsverhältnis der Kraftübertragung zwischen dem zum Ankoppeln der Kalibrierkraft dienenden Bereich und dem ausgangsseitigen Ankopplungsbereich unterscheidet. Mit dieser Anordnung kann beispielsweise der gesamte Wägebereich einer 32-kg-Wägezelle mit einer Untersetzung von 1:100 unter Verwendung eines Kalibriergewichtes von nur 320 g erreicht werden, wenn das Kalibriergewicht mit seiner vollen Gewichtskraft auf die Lastmeßeinrichtung wirkt.

Bei einem Hebelwerk mit mindestens zwei Hebeln ist es im Hinblick auf die Verwendung möglichst einfach handhabbarer Kalibriergewichte besonders vorteilhaft, wenn der zur Kalibrierung dienende Ankopplungsbereich mit einem dem den eingangsseitigen Ankopplungsbereich aufweisenden Hebel nachgeschalteten Hebel verbunden ist.

Im Hinblick auf eine möglichst positionsunabhängige Lastmessung ist es besonders zweckmäßig, wenn auch die Lastaufnahmeeinrichtung eine Lastparallelogrammführung mit zwei zueinander parallelen Lastlenkern, die an ihren einen Enden durch ein parallelgeführtes Lasteinleitungsglied und an ihren anderen Enden durch einen feststehenden Ständer miteinander verbunden sind, aufweist.

Mit einer derartig angeordneten Lastaufnahmeeinrichtung kann ein besonders kompakter Waagenaufbau erreicht werden, wenn ein Teil des Ständers sich zwischen den Lastlenkern erstreckt und als Abstützung für das ebenfalls im wesentlichen zwischen den Lastlenkern angeordnete Hebelwerk dient.

Eine weitere Verringerung des Raumbedarfs einer derartigen Vorrichtung wird erreicht, wenn der Ständer gleichzeitig das feststehende Glied der Parallelogrammführung der Kalibriervorrichtung bildet, wobei es besonders vorteilhaft ist, wenn die Parallelogrammführung der Kalibriervorrichtung im wesentlichen zwischen den Lastlenkern angeordnet ist.

Eine Erhöhung der Biegesteifigkeit der Lenker der Parallelogrammführung und/oder einzelner Elemente des Hebelwerkes kann erreicht werden, wenn mindestens ein Lenker der Parallelogrammführung der Kalibriervorrichtung durch einen zumindest abschnittweise die Form einer dünnen Schnittlinie aufweisenden materialfreien Raum vom Ständer und/oder Hebelwerk getrennt ist.

In ähnlicher Weise kann eine Erhöhung der Biegesteifigkeit der einzelnen Elemente des Hebelwerkes und der Lastaufnahmeeinrichtung erreicht werden, wenn das Hebelwerk durch einen zumindest abschnittweise die Form einer dünnen Schnittlinie aufweisenden materialfreien Bereich von der Lastaufnahmeeinrichtung getrennt ist.

Die erfindungsgemäße Kalibriervorrichtung läßt sich beispielsweise durch das Verfahren der Funkenerosion mittels eines Erosionsdrahtes besonders einfach herstellen, wenn die Lastaufnahmeeinrichtung, das Hebelwerk und die Parallelogrammführung einstückig ausgebildet sind. Daneben ist auch an eine Herstellung unter Verwendung eines Wasser- und/oder Laserstrahls gedacht.

Hinsichtlich der vorstehend mehrfach erwähnten Ausbildung materialfreier Räume in Form dünner Schnittlinien und der damit verbundenen Vorteile wird ausdrücklich auf die DE 41 19 734 A1 verwiesen.

Nachstehend werden Ausführungsbeispiele der Erfindung unter Bezugnahme auf die Zeichnung, auf die hinsichtlich aller erfindungswesentlichen und in der Beschreibung nicht weiter herausgestellten Einzelheiten ausdrücklich verwiesen wird, erläutert. In der Zeichnung zeigt:
- Fig. 1: eine Seitenansicht einer mit einer erfindungsgemäßen Kalibriervorrichtung versehenen Wägezelle,
- Fig. 2: eine erste Ausführungsform eines zum lösbaren Ankoppeln eines Kalibriergewichtes an die Wägezelle nach Fig. 1 dienenden Halters, und
- Fig. 3: eine zweite Ausführungsform eines zum lösbaren Ankoppeln eines Kalibriergewichtes an die Wägezelle nach Fig. 1 dienenden Halters.

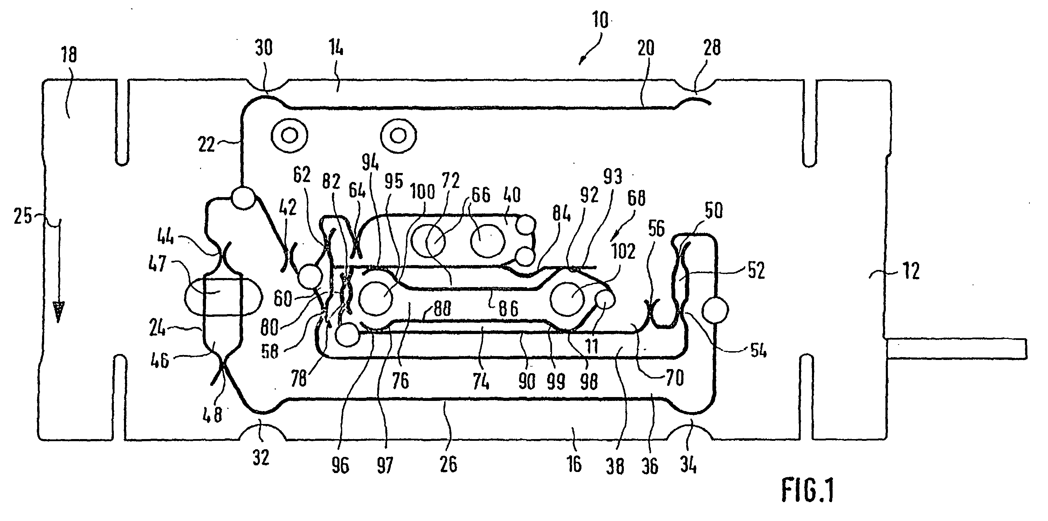

Die in Fig. 1 dargestellte Wägezelle weist einen Lastaufnehmer 12, 14, 16, 18, ein drei Hebel, nämlich einen ersten Hebel 36, einen zweiten Hebel 38 und einen dritten Hebel 40 umfassendes Hebelwerk und eine erfindungsgemäße Kalibriervorrichtung 68 auf. Diese Elemente sind einstückig aus einem im wesentlichen quaderförmigen Materialblock 10 gebildet. Zu diesem Zweck sind in dem Materialblock materialfreie Räume in Form dünner Schnittlinien durch das Verfahren der Funkenerosion mittels eines Erosionsdrahtes gebildet. Zur Einfädelung des Erosionsdrahtes ist ein Loch 11 im Materialblock 10 gebildet. In dieses Loch 11 kann zur Blockierung der später zu erläuternden Parallelogrammführung der erfindungsgemäßen Kalibriervorrichtung während der Montage auch ein Stab (nicht dargestellt) eingeführt werden. Als geeignete Werkstoffe für den einstückigen Materialblock 10 kommen beispielsweise Aluminiumlegierungen in Betracht. Daneben sind jedoch zahlreiche andere Werkstoffe denkbar, beispielsweise auch Stahllegierungen oder Verbundwerkstoffe.

Die Lastaufnahmeeinrichtung der in Fig. 1 dargestellten Wägezelle umfaßt eine aus einem feststehenden Ständer 12, einem oberen Lastlenker 14, einem unteren Lastlenker 16 und einem parallelgeführten Lasteinleitungsglied 18 bestehende Lastparallelogrammführung. Der obere Lastlenker 14 ist durch einen materialfreien Bereich 20 in Form einer dünnen Schnittlinie von einem sich zwischen dem oberen Lastlenker 14 und dem unteren Lastlenker 16 erstreckenden Bereich des Ständers 12 getrennt. Ähnlich ist der untere Lastlenker 16 durch einen materialfreien Bereich in Form einer dünnen Schnittlinie 26 von dem ersten Hebel 36 des später zu erläuternden Hebelwerkes getrennt. Das Lasteinleitungsglied 18 wird an seiner dem Ständer 12 abgewandten Seite durch eine Seitenfläche des Materialblocks 10 begrenzt, während es an seiner dem Ständer 12 zugewandten Seite durch materialfreie Bereiche 22 und 24 in Form dünner Schnittlinien vom Ständer 12 bzw. von einer ersten Koppel 46 abgegrenzt ist.

Die Lastlenker 14 und 16 sind an ihren einen Enden durch den Ständer 12 und an ihren anderen Enden durch das Lasteinleitungsglied 18 miteinander verbunden. Dazu ist der obere Lastlenker 14 einerseits über eine Biegestelle 28 an dem Ständer 12 und andererseits über eine Biegestelle 30 an dem Lasteinleitungsglied 18 angelenkt. In ähnlicher Weise ist der untere Lastlenker 16 einerseits über eine Biegestelle 34 an dem Ständer 12 und andererseits über eine Biegestelle 32 an dem Lasteinleitungsglied 18 angelenkt. Die Biegestellen 28 bis 34 werden an ihren dem Inneren des Materialblocks 10 zugewandten Seiten von Abschnitten in Form nach außen weisender konvexer Wölbungen der materialfreien Räume 20 bzw. 26 begrenzt. An den Außenflächen des Materialblocks 10 werden die Biegestellen 28 bis 34 von den konvex gewölbten Abschnitten der materialfreien Bereiche 20 und 26 gegenüberstehenden konvexen Einwölbungen des Materialblocks 10 begrenzt.

Das den ersten Hebel 36, den zweiten Hebel 38 und den dritten Hebel 40 aufweisende Hebelwerk zum Untersetzen einer in Richtung des Pfeils 25 auf das Lasteinleitungsglied wirkenden Kraft ist zwischen dem oberen Lastlenker 14 und dem unteren Lastlenker 16 angeordnet. Der an einer Biegestelle 42 hängend am Ständer 12 abgestützte erste Hebel 36 ist einerseits der Biegestelle 42 über eine Biegestelle 44, die erste Koppel 46 und eine Biegestelle 48 mit dem Lasteinleitungsglied 18 und andererseits der Biegestelle 42 über eine Biegestelle 50, eine zweite Koppel 52 und eine Biegestelle 54 mit dem zweiten Hebel 38 verbunden. Der Abstand zwischen der zur hängenden Abstützung des ersten Hebels dienenden Biegestelle 42 und der zum Anlenken des ersten Hebels 36 an die erste Koppel 46 dienenden Biegestelle 44 ist bei der in Fig. 1 dargestellten Wägezelle geringer als der Abstand zwischen der Biegestelle 42 und der zum Anlenken des ersten Hebels 36 an die zweite Koppel 52 dienenden Biegestelle 50, so daß mit dem ersten Hebel 36 eine Untersetzung der auf das Lasteinleitungsglied 18 wirkenden Kraft erfolgt.

Die erste Koppel 46 ist im Verlauf ihrer Längserstreckung zwischen den Biegestellen 48 und 44 mit von den Hauptebenen des Materialblocks 10 ausgehenden Ausnehmungen 47 versehen. Dadurch wird die Materialstärke der ersten Koppel 46 senkrecht zu diesen Hauptebenen verringert. Infolge der hierdurch erzielten Biegsamkeit der ersten Koppel 46 in der zur Parallelogrammebene der Lastparallelogrammführung senkrechten Richtung werden mithin von der ersten Koppel 46 mögliche geringfügige Verkantungen des Lasteinleitungsgliedes 18 infolge außermittiger Einleitung der zu messenden Kraft aufgenommen und nicht auf den ersten Hebel 36 übertragen.

Die mittels des ersten Hebels 36 vom Lasteinleitungsglied 18 auf den an einer Biegestelle 56 am Ständer 12 hängend abgestützten zweiten Hebel 38 übertragene Kraft wird von dem zweiten Hebel 38 über eine Biegestelle 58, eine dritte Koppel 60 und eine Biegestelle 62 an den an einer Biegestelle 64 am Ständer 12 hängend abgestützten dritten Hebel 40 übertragen. Der Abstand zwischen der zur hängenden Abstützung des zweiten Hebels 38 am Ständer 12 dienenden Biegestelle 56 und der zum Anlenken des zweiten Hebels 38 an den ersten Hebel 36 dienenden Biegestelle 54 einerseits der Biegestelle 56 ist geringer als der Abstand zwischen der Biegestelle 56 und der zum Anlenken des zweiten Hebels 38 an den dritten Hebel 40 dienenden Biegestelle 58 andererseits der Biegestelle 56. Daher wird mit dem zweiten Hebel 38 eine weitere Untersetzung der auf das Lasteinleitungsglied 18 wirkenden und über den ersten Hebel 36 auf den zweiten Hebel 38 übertragenen Kraft erreicht.

Auf seiner der zum Anlenken des dritten Hebels 40 an den zweiten Hebel 38 dienenden Biegestelle 62 jenseits der zur hängenden Abstützung des dritten Hebels 40 am Ständer 12 dienenden Biegestelle 64 entgegengesetzten Seite ist der dritte Hebel 40 mit Ausnehmungen 66 versehen. Diese Ausnehmungen dienen als Befestigungslöcher für einen über den Materialblock 10 hinausragenden Ausleger (nicht dargestellt), der beispielsweise eine mit einem Permanentmagneten zusammenwirkende Spule einer als Lastmeßeinrichtung dienenden magnetischen Kraftkompensationseinrichtung tragen kann. Alternativ ist auch die Verwendung einer Lastmeßeinrichtung in Form einer zu Schwingungen anregbaren Saite oder einer Dehnungsmeßstreifenzelle möglich. Wiederum ist der Abstand zwischen der zur hängenden Abstützung des dritten Hebels 40 am Ständer 12 dienenden Biegestelle 64 und der zum Anlenken des dritten Hebels 40 an die dritte Koppel 60 bzw. den zweiten Hebel 38 dienenden Biegestelle 62 einerseits der Biegestelle 64 geringer als der Abstand zwischen den Ausnehmungen 66 bzw. der an dem in den Ausnehmungen 66 festgelegten Ausleger angeordneten Spule andererseits der Biegestelle 64. Daher wird auch mit dem dritten Hebel 40 eine weitere Untersetzung der auf das Lasteinleitungsglied 18 wirkenden und über den ersten und zweiten Hebel 36 bzw. 38 an den dritten Hebel 40 übertragenen Kraft erreicht.

Wie bereits vorstehend erörtert, sind die bislang erläuterten Elemente der in Fig. 1 dargestellten Wägezelle einstückig gebildet und durch materialfreie Bereiche in Form dünner Schnittlinien voneinander getrennt. Dadurch wird eine Minimierung der zur Ausbildung dieser Elemente erforderlichen Materialwegnahme und folglich eine Maximierung der Festigkeit der einzelnen Elemente sichergestellt. Durch diese Maximierung der Materialstärke, insbesondere in der Nähe der Biegestellen, wird bei einem minimalen Bauvolumen eine maximale Festigkeit und Belastbarkeit erzielt. Alle bislang erläuterten, zum Anlenken der Koppeln und zur hängenden Abstützung der Hebel dienenden Biegestellen sind von einander gegenüberstehenden und zueinander komplementären bogenförmigen Abschnitten der materialfreien Bereiche in Form der dünnen Schnittlinien gebildet. Dabei sind die Biegestellen 42, 44 und 50, die Biegestellen 54, 56 und 58 sowie die Biegestellen 62 und 64 jeweils in einer Horizontalebene angeordnet. Eine andere Anordnung ist insbesondere für die Biegestellen 42, 44 und 50 denkbar.

Zum Übertragen einer zur Kalibrierung der Wägezelle dienenden Kalibrierkraft an einen der Hebel des Hebelwerks, im in Fig. 1 dargestellten Ausführungsbeispiel an den zweiten Hebel 38, ist in dem zwischen dem zweiten Hebel 38, dem dritten Hebel 40 und dem Ständer 12 begrenzten Raum eine Parallelogrammführung 68 ausgebildet. Diese Parallelogrammführung 68 weist ein durch einen Teil des Ständers 12 gebildetes, feststehendes Glied 70, einen oberen Lenker 72, einen unteren Lenker 74 und ein parallelgeführtes Glied 76 auf. Die Lenker 72 und 74 sind an ihren einen Enden über das feststehende Glied 70 und an ihren anderen Enden über das parallelgeführte Glied 76 miteinander verbunden. Das parallelgeführte Glied 76 ist zum Ankoppeln einer darauf einwirkenden Kraft über eine Biegestelle 78, eine vierte Koppel 80 und eine Biegestelle 82 mit einem der dritten Koppel 60 benachbarten Abschnitt des zweiten Hebels 38 verbunden. Demnach erfährt eine auf das parallelgeführte Glied 76 einwirkende Kraft bei ihrer Übertragung an die Lastmeßeinrichtung eine geringere Untersetzung als eine auf das Lasteinleitungsglied 18 wirkende Kraft.

Der obere Lenker 72 der Parallelogrammführung 68 wird an seiner Oberseite von einem andererseits den dritten Hebel 40 und den Ständer 12 begrenzenden materialfreien Bereich 84 in Form einer dünnen Schnittlinie begrenzt. An seiner Unterseite wird der obere Lenker 72 der Parallelogrammführung 68 von einem andererseits einen sich zwischen den Lenkern 72 und 74 erstreckenden Teil des parallelgeführten Gliedes begrenzenden, ebenfalls die Form einer dünnen Schnittlinie aufweisenden materialfreien Bereich 86 begrenzt. Der untere Lenker 74 wird an seiner Oberseite von einem andererseits die Unterseite des sich zwischen den Lenkern 72 und 74 erstreckenden Teils des parallelgeführten Gliedes 76 begrenzenden, wiederum die Form einer dünnen Schnittlinie aufweisenden materialfreien Bereich 88 begrenzt, während er an seiner Unterseite von einem andererseits den zweiten Hebel 38 begrenzenden materialfreien Bereich 90 begrenzt wird. In ähnlicher Weise ist die vierte Koppel 80 einerseits vom parallelgeführten Glied 76 und andererseits vom der dritten Koppel 60 zugewandten Endbereich des zweiten Hebels 38 getrennt.

Zur Herstellung von den oberen Lenker 72 in seiner Längsausdehnung begrenzenden Biegestellen 92 und 94 weist der den Lenker 72 nach unten begrenzende materialfreie Bereich 86 zwei in Längsrichtung der Parallelogrammführung 68 voneinander beabstandete, zum materialfreien Bereich 84 weisende konvexe Auswölbungen 93 bzw. 95 auf. In ähnlicher Weise ist der die Oberseite des Lenkers 74 begrenzende materialfreie Bereich 88 zur Ausbildung von Biegestellen 96 und 98 mit in Längsrichtung der Parallelogrammführung 68 voneinander beabstandeten, zum materialfreien Bereich 90 weisenden konvexen Auswölbungen 97 bzw. 99 versehen.

Zwischen den Auswölbungen 93 und 99 bzw. 95 und 97 weist das parallelgeführte Glied 76 eine besonders große Materialstärke und daher auch eine besonders große Festigkeit auf. Daher sind genau in diesem Bereich des parallelgeführten Gliedes 76 Ausnehmungen 100 und 102 ausgebildet, die als Aufnahme für eine sich quer zur Parallelogrammebene der Parallelogrammführung 68 erstreckende Trägereinrichtung für ein Kalibriergewicht dienen.

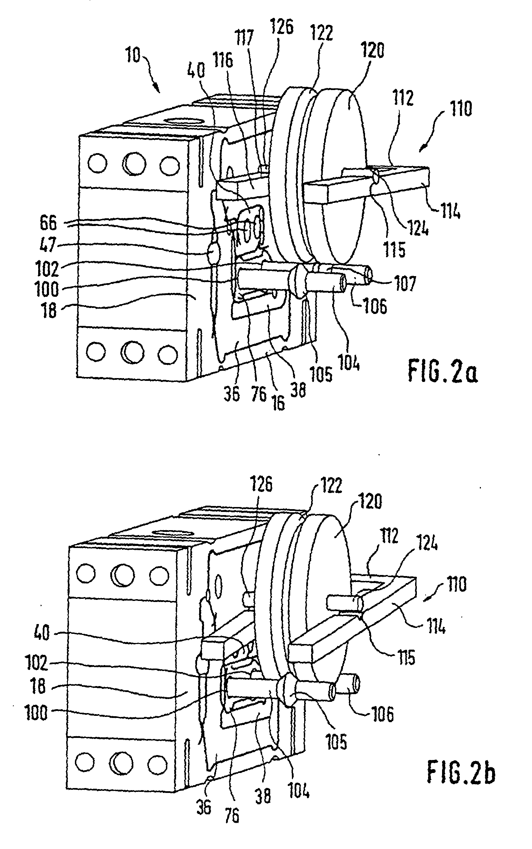

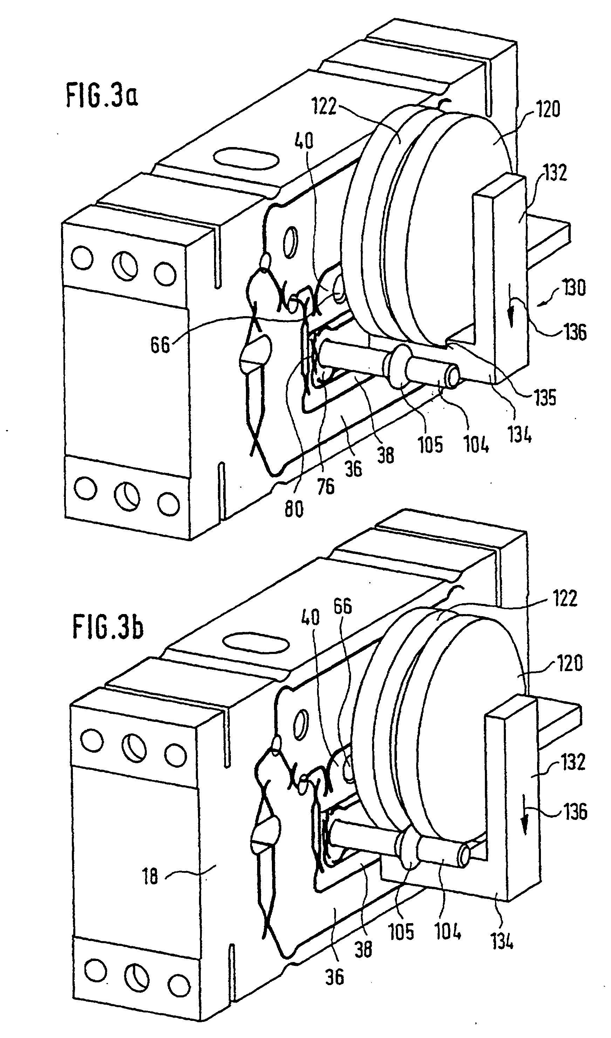

Durch die Parallelogrammführung 68 wird eine weitgehende Unabhängigkeit der über die als Ankopplungsbereich für die Kalibrierkraft dienende vierte Koppel 80 vom parallelgeführten Glied 76 an den zweiten Hebel 38 übertragenen Kraft von der Position des auf das parallelgeführte Glied wirkenden Kalibriergewichtes erreicht. Eine zum lösbaren Ankoppeln des Kalibriergewichtes an das parallelgeführte Glied 76 verwendete Mechanik kann daher ohne Beeinträchtigung der Kalibriergenauigkeit besonders einfach gebildet werden. Beispielhafte Ausführungsformen derartiger Mechaniken sind in den Fig. 2 und 3 dargestellt.

Bei der in Fig. 2 dargestellten Ausführungsform umfaßt die Mechanik im wesentlichen einen zwischen einer in Fig. 2a dargestellten ersten Position und einer in Fig. 2b dargestellten zweiten Position schwenkbaren, etwa U-förmigen Halter 110. In der in Fig. 2a dargestellten ersten Position wird das Kalibriergewicht 120 zwischen von einer etwa senkrecht zur Hauptebene des Materialblocks 10 verlaufenden Basis 112 ausgehenden, etwa parallel zur Hauptebene des Materialblocks 10 verlaufenden Schenkeln 114 und 116 des Halters 110 in einer vom parallelgeführten Glied 76 und damit vom von den Hebeln 36, 38 und 40 gebildeten Hebelwerk abgehobenen Stellung gehalten. Dazu ist das scheibenförmig, im wesentlichen kreiszylindrisch ausgebildete Kalibriergewicht 120 mit einer etwa längs der Zylinderachse verlaufenden Welle versehen, deren freie Enden 124 und 126 in der in Fig. 2a dargestellten Position des Halters 110 in Ausnehmungen 115 und 117 in den Schenkeln 114 bzw. 116 aufgenommen sind. Die freien Enden 124 und 126 bilden so zusammenwirkend mit den Ausnehmungen 115 und 117 eine Arretierung für das Kalibriergewicht 120 in der von der Wägezelle abgehobenen Position.

Zum Ankoppeln des Kalibriergewichtes 120 an das Hebelwerk über das parallelgeführte Glied 76 wird der Halter 110 in die in Fig. 2b dargestellte Position geschwenkt. In dieser Position ist der Halter 110 vollständig vom Kalibriergewicht 120 gelöst. Das Kalibriergewicht liegt nunmehr auf der in Form von zwei in den Ausnehmungen 100 und 102 des parallelgeführten Gliedes 76 aufgenommenen Stangen 104 bzw. 106 gebildeten Trägereinrichtung des parallelgeführten Gliedes 76 auf. Bei der in Fig. 2 dargestellten Ausführungsform erstrecken sich die Stangen 104 und 106 etwa senkrecht zur Hauptebene des Materialblocks 10. Das an das Hebelwerk angekoppelte Kalibriergewicht 120 ist daher sich etwa parallel zur Parallelogrammebene der Parallelogrammführung erstreckend neben dem Materialblock 10 angeordnet. Die der Kalibrierung der Waage dienenden Elemente führen dabei zu keiner wesentlichen Vergrößerung der Längen- und Höhendimension der Wägezelle.

In seiner an das Hebelwerk angekoppelten Stellung befindet sich ein unterer Bereich des einen den Abstand der beiden Stangen 104 und 106 übersteigenden Durchmesser aufweisenden Kalibriergewichtes zwischen den Stangen 104 und 106, wobei das Kalibriergewicht 120 mit nach unten weisende Flächennormalen aufweisenden Flächenbereichen an den Stangen 104 und 106 anliegt. Dadurch wird eine genaue Positionierung des Kalibriergewichtes 120 in Längsrichtung der Lenker 72 und 74 erreicht.

Zur genauen Positionierung des Kalibriergewichtes 120 in Längsrichtung der Stangen 104 und 106 sind an den Stangen 104 und 106 Stege 105 und 107 vorgesehen, die axialschnittlich komplementär zu einer in der Mantelfläche des kreiszylindrisch ausgebildeten Kalibriergewichtes 120 umlaufenden Nut 122 geformt sind. Bei der in Fig. 2 dargestellten Ausführungsform sind die Stege 105 und 107 axialschnittlich in Form eines mit einem Schenkel an den Stangen 104 bzw. 106 anliegenden Dreiecks gebildet. Dadurch wird bei einer Verschiebung des Kalibriergewichtes in der in Fig. 2a dargestellten ersten Position in Längsrichtung der Stangen 104 und 106 unter Vermeidung einer Verkantung eine Führung des Kalibriergewichtes in die in Fig. 2b dargestellte zweite Position erreicht. Der Abstand zwischen den Stegen 105 und 107 und der diesen Stegen zugewandten Hauptfläche des Materialblocks 10 und die Ausdehnung des Kalibriergewichtes 120 in Längsrichtung der Stangen 104 und 106 sind dabei vorteilhafterweise so gewählt, daß in der in Fig. 2b dargestellten Stellung eine Berührung des Kalibriergewichtes 120 und des Halters 110 mit einem in den Ausnehmungen 66 des dritten Hebels 40 festgelegten und sich zur dem Lasteinleitungsglied 19 entgegengesetzten Begrenzungsfläche des Ständers 12 erstreckenden Ausleger (nicht dargestellt) ausgeschlossen ist.

Wie vorstehend erläutert, ist mit dem in Fig. 2 dargestellten Halter 110 eine Arretierung des Kalibriergewichtes 120 in seiner vom Hebelwerk gelösten Stellung parallel zur Hauptfläche des Materialblocks 10 vermittels der freien Enden 124 und 126 der Welle bzw. der Ausnehmungen 115 bzw. 117 und senkrecht zur Hauptfläche des Materialblocks 10 vermittels der Schenkel 114 und 116 möglich. Diese Arretierung erfordert jedoch einen vergleichsweise großen Halter 110. Ein im Vergleich dazu kompakterer Halter 130 ist in Fig. 3 dargestellt. Dieser etwa L-förmige Halter 130 ist von einer in Fig. 3a dargestellten, zum Halten des Kalibriergewichtes 120 in einer vom parallelgeführten Glied 76 und damit vom Hebelwerk abgehobenen Stellung dienenden ersten Position in eine in Fig. 3b dargestellte, zum Ankoppeln des Kalibriergewichtes 120 an das parallelgeführte Glied 76 und damit an das Hebelwerk dienende zweite Position in Schwererichtung verschiebbar, wie durch den Pfeil 136 angedeutet. Die Ankopplung und Arretierung des Kalibriergewichtes 120 in der in Fig. 3b dargestellten Stellung erfolgt dabei ähnlich wie bei der anhand der Fig. 2 erläuterten Ausführungsform vermittels der Stege 105 und 107 aufweisenden Stangen 104 und 106, zusammenwirkend mit der in einer Mantelfläche des Kalibriergewichts 120 gebildeten, zur Form der Ringe 105 und 107 komplementären Nut 122.

In der in Fig. 3a dargestellten Position dient ein sich etwa senkrecht zur Hauptfläche des Materialblocks 10 erstreckender Schenkel 134 des Halters 130 als Auflage für das von den Stangen 104 und 106 abgehobene Kalibriergewicht 120. Zur Arretierung des Kalibriergewichtes 120 ist an der Oberseite des Schenkels 134 eine als Anschlag für das Kalibriergewicht 120 dienende Stufe 135 ausgebildet. Der sich etwa in Schwererichtung erstreckende Schenkel 132 des Halters 130 verhindert auch eine vollständige Verkippung des Kalibriergewichtes 120 um eine etwa parallel zu den Lenkern 72 und 74 verlaufende Achse.

Sowohl bei der in Fig. 2 als auch bei der in Fig. 3 dargestellten Ausführungsform ist an dem die Wägezelle und die der Kalibrierung dienenden Teile umschließenden Gehäuse ein Gegenhalter ausgebildet, an den das Kalibriergewicht 120 in seiner in Fig. 2a bzw. Fig. 3a dargestellten abgehobenen Position in Anlage gehalten und dadurch unverrückbar festgehalten wird. Ferner ist bei diesen Ausführungsformen vorzugsweise die gesamte Anordnung symmetrisch zur Hauptebene des Materialblocks 10 ausgebildet, d. h. daß auch auf der in Fig. 2 und 3 dem Betrachter abgewandten Seite des Materialblocks 110 eine der dem Betrachter zugewandten Seite entsprechende Anordnung aus Kalibriergewicht 120, Stangen 104 und 106 sowie einem Halter 110 bzw. 130 vorgesehen ist. Hierdurch wird die Einleitung von quer zur Hauptebene des Materialblocks 10 wirkenden Torsionskräften in die Parallelogrammführung 68 vermieden. Letzteres ist jedoch nicht unbedingt erforderlich. Vielmehr hat es sich gezeigt, daß auch schon mit einer unsymmetrischen, einseitigen Anordnung die Ankopplung des Kalibriergewichts 120 ausreichend genau ist.

Die Erfindung ist nicht auf die anhand der Zeichnung erläuterten Ausführungsbeispiele beschränkt. Beispielsweise ist auch an eine Verwendung der erfindungsgemäßen Kalibriervorrichtung in Verbindung mit einem keine Parallelogrammführung aufweisenden Lastaufnehmer gedacht. Ferner kann die erfindungsgemäße Kalibriervorrichtung auch in vorteilhafter Weise in Verbindung mit eine Kraftübersetzung liefernden Hebelwerken eingesetzt werden. Schließlich ist auch an die Möglichkeit der unabhängigen Ankopplung zweier oder mehrerer Kalibriergewichte gedacht.

## Patentansprüche

1. Kalibriervorrichtung für eine eine Lastaufnahmeeinrichtung (12, 14, 16, 18) für zu wiegende Lasten, eine Lastmeßeinrichtung und ein der Kraftübertragung zwischen der Lastaufnahmeeinrichtung (12, 14, 16, 18) und der Lastmeßeinrichtung dienendes Hebelwerk (36, 38, 40), das mit einem eingangsseitigen Ankopplungsbereich (46) an die Lastaufnahmeeinrichtung (12, 14, 16, 18) und mit einem ausgangsseitigen Ankopplungsbereich (66) an die Lastmeßeinrichtung angekoppelt ist, aufweisende Waage, wobei das Hebelwerk (36, 38, 40) ferner einen von dem eingangsseitigen und dem ausgangsseitigen Ankopplungsbereich (46, 66) getrennten Ankopplungsbereich (80) zur lösbaren Ankopplung einer für den normalen Wägebetrieb abkoppelbaren Kalibrierkraft aufweist, **dadurch gekennzeichnet, daß** der zur Kalibrierung dienende Ankopplungsbereich (80) mit einem zur Richtung der Kalibrierkraft parallelgeführten und zu deren lösbaren Ankopplung dienenden Glied (76) einer Parallelogrammführung (68) mit zwei zueinander parallelen Lenkern (72, 74), die an ihren einen Enden durch das parallelgeführte Glied (76) und an ihren anderen Enden durch ein feststehendes Glied (70) miteinander verbunden sind, gekoppelt ist.

2. Kalibriervorrichtung nach Anspruch 1, **dadurch gekennzeichnet, daß** die Kalibriervorrichtung ein an das parallelgeführte Glied (76) ankoppelbares, die Kalibrierkraft erzeugendes Kalibriergewicht (120) aufweist.

3. Kalibriervorrichtung nach Anspruch 2, **dadurch gekennzeichnet, daß** an dem parallelgeführten Glied (76) eine Trägereinrichtung (104, 106) mit sich im wesentlichen quer zur Parallelogrammebene der Parallelogrammführung erstreckenden Aufnahmebereichen für das Kalibriergewicht (120) angeordnet ist.

4. Kalibriervorrichtung nach Anspruch 3, **dadurch gekennzeichnet, daß** die Trägereinrichtung (104, 106) ein Arretierelement (105, 107) für das Kalibriergewicht (120) aufweist.

5. Kalibriervorrichtung nach Anspruch 4, **dadurch gekennzeichnet, daß** das Arretierelement (105, 107) eine Ausnehmung und/oder einen Vorsprung und das Kalibriergewicht (120) einen damit in Eingriff bringbaren komplementären Vorsprung und/oder eine damit in Eingriff bringbare komplementäre Ausnehmung (122) aufweist.

6. Kalibriervorrichtung nach einem der Ansprüche 3 bis 5, **dadurch gekennzeichnet, daß** die Trägereinrichtung zwei in Längsrichtung der Lenker (72, 74) voneinander beabstandete und sich im wesentlichen parallel zueinander erstreckende, vorzugsweise stangenförmige Trägerelemente (104, 106) aufweist.

7. Kalibriervorrichtung nach Anspruch 4 und 6, **dadurch gekennzeichnet, daß** mindestens eines der Trägerelemente (104, 106) einen koaxial zu dessen Längsachse umlaufenden, das Arretierelement bildenden Steg (105, 107) und das Kalibriergewicht (120) eine der axialschnittlichen Form des Steges (105, 107) entsprechende Ausnehmung (122) aufweist.

8. Kalibriervorrichtung nach Anspruch 7, **dadurch gekennzeichnet, daß** der Steg (105, 107) axialschnittlich die Form eines Dreiecks mit einem an dem Trägerelement (104, 106) anliegenden Schenkel aufweist.

9. Kalibriervorrichtung nach einem der Ansprüche 2 bis 8, **gekennzeichnet durch** einen in einer ersten Position zum Halten des Kalibriergewichtes (120) in einer vom parallelgeführten Glied (76) gelösten Stellung dienenden und zum Ankoppeln des Kalibriergewichtes (120) an das parallelgeführte Glied (76) in eine zweite Position verstellbaren Halter (110, 130).

10. Kalibriervorrichtung nach Anspruch 9, **dadurch gekennzeichnet, daß** der Halter (110, 130) einen Auflagebereich aufweist, auf dem das Kalibriergewicht (120) entgegen der Schwererichtung abstützbar ist.

11. Kalibriervorrichtung nach Anspruch 10, **dadurch gekennzeichnet, daß** der Auflagebereich des Halters (110, 130) einen das Kalibriergewicht (120) quer zur Schwererichtung abstützenden Flächenbereich (115, 117, 135) aufweist.

12. Kalibriervorrichtung nach einem der Ansprüche 9 bis 11, **dadurch gekennzeichnet, daß** der Halter (110) zwischen seiner ersten und zweiten Position um eine sich vorzugsweise senkrecht zur Parallelogrammebene erstreckende Achse schwenkbar ist.

13. Kalibriervorrichtung nach einem der Ansprüche 9 bis 11, **dadurch gekennzeichnet, daß** der Halter (130) zwischen seiner ersten und zweiten Position in Schwererichtung (136) verschiebbar ist.

14. Kalibriervorrichtung nach einem der Ansprüche 9 bis 13, **dadurch gekennzeichnet, daß** der Halter (110) im wesentlichen U-förmig ausgebildet ist und das Kalibriergewicht (120) in der ersten Position zwischen den U-Schenkeln (114, 116) gehalten wird.

15. Kalibriervorrichtung nach einem der Ansprüche 9 bis 13, **dadurch gekennzeichnet, daß** der Halter (130) im wesentlichen L-förmig ausgebildet ist, wobei einer der L-Schenkel (134) in der ersten Position an der Unterseite des Kalibriergewichtes (120) anliegt.

16. Kalibriervorrichtung nach Anspruch 6 und 15, **dadurch gekennzeichnet, daß** der an der Unterseite des Kalibriergewichtes anliegende L-Schenkel (134) sich in der zweiten Position im wesentlichen zwischen den Trägerelementen (104, 106) erstreckt.

17. Kalibriervorrichtung nach einem der vorhergehenden Ansprüche, **dadurch gekennzeichnet, daß** sich ein Bereich des parallelgeführten Gliedes (76) zwischen den Lenkern (72, 74) erstreckt.

18. Kalibriervorrichtung nach Anspruch 17, **dadurch gekennzeichnet, daß** der sich zwischen den Lenkern erstreckende Bereich des parallelgeführten Gliedes (76) zumindest abschnittweise durch einen materialfreien Raum in Form einer dünnen Schnittlinie von den Lenkern (72, 74) getrennt ist.

19. Kalibriervorrichtung nach Anspruch 18, **dadurch gekennzeichnet, daß** jeder der Lenker (72, 74) zwei in seiner Längsrichtung voneinander beabstandete Biegestellen (92, 94, 96, 98) aufweist, die den Biegestellen des jeweils anderen Lenkers gegenüberstehen, von denen mindestens eine auf ihrer der gegenüberstehenden Biegestelle zugewandten Seite von einem andererseits das parallelgeführte Glied (76) begrenzenden materialfreien Raum (86, 88) in Form eines sich konvex zur Biegestelle (92, 94, 96, 98) wölbenden Abschnitts (93, 95, 97, 99) einer dünnen Schnittlinie (B6, 88) begrenzt ist.

20. Kalibriervorrichtung nach Anspruch 3 und 19, **dadurch gekennzeichnet, daß** die Trägereinrichtung (104, 106) zwischen der von dem materialfreien Raum in Form einer dünnen Schnittlinie begrenzten Biegestelle (92, 94, 96, 98) und der dieser gegenüberstehenden Biegestelle (92, 94, 96, 98) angeordnet ist.

21. Kalibriervorrichtung nach einem der vorhergehenden Ansprüche, **dadurch gekennzeichnet, daß** der zur Ankopplung der Kalibrierkraft dienende Bereich (80) einerseits über eine Biegestelle (78) an das Hebelwerk (36, 38, 40) und andererseits über eine weitere Biegestelle (82) an das parallelgeführte Glied (76) angelenkt ist.

22. Kalibriervorrichtung nach Anspruch 21, **dadurch gekennzeichnet, daß** mindestens eine der zum Anlenken des zur Ankopplung dienenden Bereichs (80) vorgesehenen Biegestellen (78, 82) zumindest einerseits von einem materialfreien Bereich in Form einer dünnen Schnittlinie begrenzt ist.

23. Kalibriervorrichtung nach einem der vorhergehenden Ansprüche, **dadurch gekennzeichnet, daß** das Übersetzungsverhältnis der Kraftübertragung zwischen dem eingangsseitigen Ankopplungsbereich (46) und dem ausgangsseitigen Ankopplungsbereich (66) sich von dem Übersetzungsverhältnis der Kraftübertragung zwischen dem zum Ankoppeln der Kalibrierkraft dienenden Bereich (80) und dem ausgangsseitigen Ankopplungsbereich (66) unterscheidet.

24. Kalibriervorrichtung nach einem der vorhergehenden Ansprüche, **dadurch gekennzeichnet, daß** das Hebelwerk mindestens zwei Hebel (36, 38, 40) aufweist und der zur Kalibrierung dienende Ankopplungsbereich mit einem dem den eingangsseitigen Ankopplungsbereich (66) aufweisenden Hebel nachgeschalteten Hebel verbunden ist.

25. Kalibriervorrichtung nach einem der vorhergehenden Ansprüche, **dadurch gekennzeichnet, daß** die Lastaufnahmeeinrichtung eine Lastparallelogrammführung mit zwei zueinander parallelen Lastlenkern (14, 16), die an ihren einen Enden durch ein parallelgeführtes Lasteinleitungsglied (18) und an ihren anderen Enden durch einen feststehenden Ständer (12) miteinander verbunden sind, aufweist.

26. Kalibriervorrichtung nach Anspruch 25, **dadurch gekennzeichnet, daß** ein Teil des Ständers (12) sich zwischen den Lastlenkern (14, 16) erstreckt und als Abstützung (42, 56, 64) für das ebenfalls im wesentlichen zwischen den Lastlenkern (14, 16) angeordnete Hebelwerk (36, 38, 40) dient.

27. Kalibriervorrichtung nach Anspruch 25 oder 26, **dadurch gekennzeichnet, daß** der Ständer (12) das feststehende Glied (70) der Parallelogrammführung (68) bildet.

28. Kalibriervorrichtung nach Anspruch 27, **dadurch gekennzeichnet, daß** die Parallelogrammführung (68) im wesentlichen zwischen den Lastlenkern (14, 16) angeordnet ist.

29. Kalibriervorrichtung nach Anspruch 28, **dadurch gekennzeichnet, daß** mindestens ein Lenker (72, 74) der Parallelogrammführung (68) durch einen zumindest abschnittweise die Form einer dünnen Schnittlinie aufweisenden materialfreien Raum (84, 90) vom Ständer (12) und/oder Hebelwerk (36, 38, 40) getrennt ist.

30. Kalibriervorrichtung nach einem der Ansprüche 26 bis 29, **dadurch gekennzeichnet, daß** das Hebelwerk (36, 38, 40) durch einen zumindest abschnittweise die Form einer dünnen Schnittlinie aufweisenden materialfreien Bereich (24) von der Lastaufnahmeeinrichtung (12, 14, 16, 18) getrennt ist.

31. Kalibriervorrichtung nach einem der vorhergehenden Ansprüche, **dadurch gekennzeichnet, daß** die Lastaufnahmeeinrichtung (12, 14, 16, 18), das Hebelwerk (36, 38, 40) und die Parallelogrammführung (70, 72, 74, 76) einstückig ausgebildet sind.

## Claims

1. Calibration apparatus for a scale, which comprises a load receiving device (12, 14, 16, 18) for loads to be weighed, a load measuring device and a lever mechanism (36, 38, 40), which is used for load transmission between the load receiving device (12, 14, 16, 18) and the load measuring device and is coupled by an input-side coupling region (46) to the load receiving device (12, 14, 16, 18) and by an output-side coupling region (66) to the load measuring device, wherein the lever mechanism (36, 38, 40) further comprises a coupling region (80), which is separate from the input-side and the output-side coupling region (46, 66), for the releasable coupling of a calibrating load, which may be uncoupled for the normal weighing operation, **characterized in that** the coupling region (80) used for calibration is coupled to a member (76), which is guided parallel to the direction of the calibrating load and is used for releasable coupling of the latter, of a parallelogram suspension (68) having two mutually parallel connecting rods (72, 74), which are connected to one another at their one ends by the parallel-guided member (76) and at their other ends by a fixed member (70).

2. Calibration apparatus according to claim 1, **characterized in that** the calibration apparatus comprises a calibrating weight (120), which may be coupled to the parallel-guided member (76) and generates the calibrating load.

3. Calibration apparatus according to claim 2, **characterized in that** disposed on the parallel-guided member (76) is a carrier device (104, 106) having receiving regions for the calibrating weight (120), which extend substantially at right angles to the parallelogram plane of the parallelogram suspension.

4. Calibration apparatus according to claim 3, **characterized in that** the carrier device (104, 106) comprises an arresting element (105, 107) for the calibrating weight (120).

5. Calibration apparatus according to claim 4, **characterized in that** the arresting element (105, 107) comprises a recess and/or a projection and the calibrating weight (120) comprises a complementary projection and/or a complementary recess (122) bringable into engagement therewith.

6. Calibration apparatus according to one of claims 3 to 5, **characterized in that** the carrier device comprises two preferably rod-shaped carrier elements (104, 106), which are spaced apart from one another in longitudinal direction of the connecting rods (72, 74) and extend substantially parallel to one another.

7. Calibration apparatus according to claim 4 and 6, **characterized in that** at least one of the carrier elements (104, 106) comprises a circumferential web (105, 107), which is disposed coaxially with the longitudinal axis of said carrier element and forms the arresting element, and the calibrating weight (120) comprises a recess (122), which corresponds to the shape in axial section of the web (105, 107).

8. Calibration apparatus according to claim 7, **characterized in that** the web (105, 107) in axial section has the shape of a triangle having one side resting against the carrier element (104, 106).

9. Calibration apparatus according to one of claims 2 to 8, **characterized by** a holder (110, 130), which in a first position is used to hold the calibrating weight (120) in a position of release from the parallel-guided member (76) and is displaceable into a second position for coupling the calibrating weight (120) to the parallel-guided member (76).

10. Calibration apparatus according to claim 9, **characterized in that** the holder (110, 130) comprises a supporting region, against which the calibrating weight (120) is supportable counter to the direction of gravity.

11. Calibration apparatus according to claim 10, **characterized in that** the supporting region of the holder (110, 130) comprises a surface region (115, 117, 135), which supports the calibrating weight (120) at right angles to the direction of gravity.

12. Calibration apparatus according to one of claims 9 to 11, **characterized in that** the holder (110) is capable of swivelling between its first and second position about an axis, which preferably extends at right angles to the parallelogram plane.

13. Calibration apparatus according to one of claims 9 to 11, **characterized in that** the holder (130) is displaceable between its first and second position in the direction of gravity (136).

14. Calibration apparatus according to one of claims 9 to 13, **characterized in that** the holder (110) is of a substantially U-shaped construction and the calibrating weight (120) is held in the first position between the U-limbs (114, 116).

15. Calibration apparatus according to one of claims 9 to 13, **characterized in that** the holder (130) is of a substantially L-shaped construction, wherein one of the L-limbs (134) rests in the first position against the underside of the calibrating weight (120).

16. Calibration apparatus according to claim 6 and 15, **characterized in that** the L-limb (134) resting against the underside of the calibrating weight extends in the second position substantially between the carrier elements (104, 106).

17. Calibration apparatus according to one of the preceding claims, **characterized in that** a region of the parallel-guided member (76) extends between the connecting rods (72, 74).

18. Calibration apparatus according to claim 17, **characterized in that** the region of the parallel-guided member (76) extending between the connecting rods is separated at least in sections from the connecting rods (72, 74) by a material-free space in the form of a thin cutting line.

19. Calibration apparatus according to claim 18, **characterized in that** each of the connecting rods (72, 74) has two bending points (92, 94, 96, 98), which are spaced apart from one another in longitudinal direction of the connecting rod and lie opposite the bending points of the other connecting rod and of which at least one is delimited at its side directed towards the opposing bending point by a material-free space (86, 88), which takes the form of an, in relation to the bending point (92, 94, 96, 98), convexly curved portion (93, 95, 97, 99) of a thin cutting line (86, 88) and at the other side delimits the parallel-guided member (76).

20. Calibration apparatus according to claim 3 and 19, **characterized in that** the carrier device (104, 106) is disposed between the bending point (92, 94, 96, 98), which is delimited by the material-free space in the form of a thin cutting line, and the bending point (92, 94, 96, 98) lying opposite said bending point.

21. Calibration apparatus according to one of the preceding claims, **characterized in that** the region (80) used for coupling of the calibrating load is coupled, on the one hand, by a bending point (78) to the lever mechanism (36, 38, 40) and, on the other hand, by a further bending point (82) to the parallel-guided member (76).

22. Calibration apparatus according to claim 21, **characterized in that** at least one of the bending points (78, 82), which are provided for coupling the region (80) used for coupling, is delimited at least at one side by a material-free region in the form of a thin cutting line.

23. Calibration apparatus according to one of the preceding claims, **characterized in that** the load increasing ratio of the load transmission between the input-side coupling region (46) and the output-side coupling region (66) differs from the load increasing ratio of the load transmission between the region (80), which is used for coupling the calibration load, and the output-side coupling region (66).

24. Calibration apparatus according to one of the preceding claims, **characterized in that** the lever mechanism comprises at least two levers (36, 38, 40) and the coupling region used for calibration is connected to a lever, which is disposed downstream of the lever having the input-side coupling region (66).

25. Calibration apparatus according to one of the preceding claims, **characterized in that** the load receiving device comprises a load parallelogram suspension having two mutually parallel load connecting rods (14, 16), which are connected to one another at their one ends by a parallel-guided load introduction member (18) and at their other ends by a fixed post (12).

26. Calibration apparatus according to claim 25, **characterized in that** a part of the post (12) extends between the load connecting rods (14, 16) and serves as a support (42, 56, 64) for the lever mechanism (36, 38, 40) disposed likewise substantially between the load connecting rods (14, 16).

27. Calibration apparatus according to claim 25 or 26, **characterized in that** the post (12) forms the fixed member (70) of the parallelogram suspension (68).

28. Calibration apparatus according to claim 27, **characterized in that** the parallelogram suspension (68) is disposed substantially between the load connecting rods (14, 16).

29. Calibration apparatus according to claim 28, **characterized in that** at least one connecting rod (72, 74) of the parallelogram suspension (68) is separated from the post (12) and/or lever mechanism (36, 38, 40) by a material-free space (84, 90), which at least in sections has the form of a thin cutting line.

30. Calibration apparatus according to one of claims 26 to 29, **characterized in that** the lever mechanism (36, 38, 40) is separated from the load receiving device (12, 14, 16, 18) by a material-free region (24), which at least in sections has the form of a thin cutting line.

31. Calibration apparatus according to one of the preceding claims, **characterized in that** the load receiving device (12, 14, 16, 18), the lever mechanism (36, 38, 40) and the parallelogram suspension (70, 72, 74, 76) are of an integral construction.

## Revendications

1. Dispositif de calibrage pour une balance comprenant une installation de réception des charges (12, 14, 16, 18) pour des charges à peser, un dispositif de mesure des charges et un système de leviers (36, 38, 40), qui sert à la transmission des efforts entre l'installation de réception des charges (12, 14, 16, 18) et le dispositif de mesure des charges et qui est accouplé avec une zone d'accouplement (46) du côté entrée à l'installation de réception des charges (12, 14, 16, 18) et avec une zone d'accouplement (66) du côté sortie au dispositif de mesure des charges, le système de leviers (36, 38, 40) comprenant par ailleurs une zone d'accouplement (80), qui est séparée de la zone d'accouplement du côté entrée et de la zone d'accouplement du côté sortie (46, 66) et qui sert à assurer un accouplement amovible d'une force de calibrage pouvant être accouplée pour le fonctionnement normal de la pesée, **caractérisé en ce que** la zone d'accouplement (80) servant au calibrage est accouplée à un élément (76) d'un guide à parallélogramme (68) avec deux bras de guidage parallèles l'un par rapport à l'autre (72, 74), qui sont reliés entre eux aux unes de leurs extrémités par l'élément guidé parallèlement (76) et à leurs autres extrémités par un élément fixe (70), cet élément étant guidé parallèlement à la direction de la force de calibrage et servant à l'accouplement amovible de celle-ci.

2. Dispositif de calibrage selon la revendication 1, **caractérisé en ce qu'**il comprend un poids de calibrage (120) générant la force de calibrage et pouvant être accouplé à l'élément guidé parallèlement (76).

3. Dispositif de calibrage selon la revendication 2, **caractérisé en ce que** sur l'élément guidé parallèlement (76) est placé un dispositif porteur (104, 106) avec des zones de réception pour le poids de calibrage (120) s'étendant sensiblement en direction transversale par rapport au plan du parallélogramme du guide à parallélogramme.

4. Dispositif de calibrage selon la revendication 3, **caractérisé en ce que** le dispositif porteur (104, 106) comprend un élément d'arrêt (105, 107) pour le poids de calibrage (120).

5. Dispositif de calibrage selon la revendication 4, **caractérisé en ce que** l'élément d'arrêt (105, 107) comprend un évidement et/ou une avancée et le poids de calibrage (120) une avancée complémentaire pouvant y être introduite et/ou un évidement complémentaire (122) pouvant y être introduit.

6. Dispositif de calibrage selon l'une des revendications 3 à 5, **caractérisé en ce que** le dispositif porteur comprend deux éléments porteurs (104, 106), de préférence en forme de barres, espacés entre eux en direction longitudinale des bras de guidage (72, 74) et s'étendant sensiblement parallèlement l'un par rapport à l'autre.

7. Dispositif de calibrage selon les revendications 4 et 6, **caractérisé en ce qu'**au moins un des éléments porteurs (104, 106) comprend une nervure (105, 107) placée de manière coaxiale autour de son axe longitudinal et formant l'élément d'arrêt et **en ce que** le poids de calibrage (120) comprend un évidement (122) correspondant à la forme en coupe axiale de la nervure (105, 107).

8. Dispositif de calibrage selon la revendication 7, **caractérisé en ce qu'**en coupe axiale la nervure (105, 107) a la forme d'un triangle avec une branche reposant sur l'élément porteur (104, 106).

9. Dispositif de calibrage selon l'une des revendications 2 à 8, **caractérisé par** un support (110, 130) servant dans une première position au maintien du poids de calibrage (120) dans une disposition dégagée par rapport à l'élément guidé parallèlement (76) et pouvant être déplacé dans une deuxième position pour le couplage du poids de calibrage (120) à l'élément guidé parallèlement (76).

10. Dispositif de calibrage selon la revendication 9, **caractérisé en ce que** le support (110, 130) comprend une zone d'appui sur laquelle le poids de calibrage (120) peut être mis en appui contre la direction de la gravité.

11. Dispositif de calibrage selon la revendication 10, **caractérisé en ce que** la zone d'appui du support (110, 130) comprend une zone de surface (115, 117, 135) étayant le poids de calibrage (120) transversalement à la direction de la gravité.

12. Dispositif de calibrage selon l'une des revendications 9 à 11, **caractérisé en ce qu'**entre sa première et sa deuxième position le support (110) peut être pivoté autour d'un axe s'étendant de préférence perpendiculairement au plan du parallélogramme.

13. Dispositif de calibrage selon l'une des revendications 9 à 11, **caractérisé en ce qu'**entre sa première et sa deuxième position le support (130) peut être déplacé en direction de la gravité (136).

14. Dispositif de calibrage selon l'une des revendications 9 à 13, **caractérisé en ce que** le support (110) a sensiblement la forme d'un U et **en ce que** dans la première position le poids de calibrage (120) est maintenu entre les branches du U (114, 116).

15. Dispositif de calibrage selon l'une des revendications 9 à 13, **caractérisé en ce que** le support (130) a sensiblement la forme d'un L, une des branches du L (134) étant, dans la première position, en appui sur le côté inférieur du poids de calibrage (120).

16. Dispositif de calibrage selon les revendications 6 et 15, **caractérisé en ce que**, dans la deuxième position, la branche du L (134) s'appuyant sur le côté inférieur du poids de calibrage s'étend sensiblement entre les éléments porteurs (104, 106).

17. Dispositif de calibrage selon l'une des revendications précédentes, **caractérisé en ce qu'**une zone de l'élément guidé parallèlement (76) s'étend entre les bras de guidage (72, 74).

18. Dispositif de calibrage selon la revendication 17, **caractérisé en ce que** la zone de l'élément guidé parallèlement (76) s'étendant entre les bras de guidage est séparée au moins par sections des bras de guidage (72, 74) par un volume exempt de matériau sous la forme d'une mince ligne d'intersection.

19. Dispositif de calibrage selon la revendication 18, **caractérisé en ce que** chacun des bras de guidage (72, 74) comprend deux points de cintrage (92, 94, 96, 98) espacés entre eux dans sa direction longitudinale, qui sont opposés aux points de cintrage de l'autre bras de guidage respectif, desquels au moins un est limité sur son côté dirigé vers le point de cintrage opposé par un volume (86, 88) exempt de matériau réalisant une limitation de l'autre côté de l'élément guidé parallèlement (76) et ayant la forme d'une section (93, 95, 97, 99) d'une mince ligne d'intersection (86, 88) ayant une courbure convexe vers le point de cintrage (92, 94, 96, 98).

20. Dispositif de calibrage selon les revendications 3 et 19, **caractérisé en ce que** le dispositif porteur (104, 106) est disposé entre le point de cintrage (92, 94, 96, 98) limité par le volume exempt de matériau sous la forme d'une mince ligne d'intersection et le point de cintrage opposé à celui-ci (92, 94, 96, 98).

21. Dispositif de calibrage selon l'une des revendications précédentes, **caractérisé en ce que** la zone (80) servant à l'accouplement de la force de calibrage est articulée d'une part par l'intermédiaire d'un point de cintrage (78) au système de leviers (36, 38, 40) et d'autre part par l'intermédiaire d'un autre point de cintrage (82) à l'élément guidé parallèlement (76).

22. Dispositif de calibrage selon la revendication 21, **caractérisé en ce qu'**au moins un des points de cintrage (78, 82) prévus pour l'articulation de la zone (80) servant à l'accouplement est limité au moins d'un côté par une zone exempte de matériau sous la forme d'une mince ligne d'intersection.

23. Dispositif de calibrage selon l'une des revendications précédentes, **caractérisé en ce que** le rapport de multiplication de la transmission d'efforts entre la zone d'accouplement du côté entrée (46) et la zone d'accouplement du côté sortie (66) est différent du rapport de multiplication de la transmission d'efforts entre la zone servant à l'accouplement de la force de calibrage (80) et la zone d'accouplement du côté sortie (66).

24. Dispositif de calibrage selon l'une des revendications précédentes, **caractérisé en ce que** le système de leviers comprend au moins deux leviers (36, 38, 40) et **en ce que** la zone d'accouplement servant au calibrage est reliée au levier situé en aval du levier comprenant la zone d'accouplement du côté entrée (66).

25. Dispositif de calibrage selon l'une des revendications précédentes, **caractérisé en ce que** l'installation de réception des charges comprend un guide des charges à parallélogramme avec deux bras de guidage des charges parallèles entre eux (14, 16), qui sont reliés entre eux aux unes de leurs extrémités par un élément d'introduction des charges guidé parallèlement (18) et à leurs autres extrémités par un support fixe (12).

26. Dispositif de calibrage selon la revendication 25, **caractérisé en ce qu'**une partie du support (12) s'étend entre les bras de guidage des charges (14, 16) et sert de soutien (42, 56, 64) pour le système de leviers (36, 38, 40) également disposé sensiblement entre les bras de guidage des charges (14, 16).

27. Dispositif de calibrage selon la revendication 25 ou 26, **caractérisé en ce que** le support (12) constitue l'élément fixe (70) du guide à parallélogramme (68).

28. Dispositif de calibrage selon la revendication 27, **caractérisé en ce que** le guide à parallélogramme (68) est sensiblement disposé entre les bras de guidage des charges (14, 16).

29. Dispositif de calibrage selon la revendication 28, **caractérisé en ce qu'**au moins un bras de guide (72, 74) du guide à parallélogramme (68) est séparé du support (12) et/ou du système de leviers (36, 38, 40) par un volume exempt de matériau (84, 90) ayant au moins par sections la forme d'une mince ligne d'intersection.

30. Dispositif de calibrage selon l'une des revendications 26 à 29, **caractérisé en ce que** le système de leviers (36, 38, 40) est séparé de l'installation de réception des charges (12, 14, 16, 18) par une zone exempte de matériau (24) ayant au moins par sections la forme d'une mince ligne d'intersection.

31. Dispositif de calibrage selon l'une des revendications précédentes, **caractérisé en ce que** l'installation de réception des charges (12, 14, 16, 18), le système de leviers (36, 38, 40) et le guide à parallélogramme (70, 72, 74, 76) sont réalisés d'une seule pièce.
